# EUROPÄISCHE PATENTSCHRIFT

(11) **EP 1 514 373 B1**
(45) Veröffentlichungstag und Bekanntmachung des Hinweises auf die Patenterteilung: **14.03.2007**
(21) Anmeldenummer: 03729866.8
(22) Anmeldetag: 06.05.2003
(51) Int. Cl.: H04J 14/06, H04B 10/135

(54) **VERFAHREN UND ANORDNUNG ZUR VERRINGERUNG DER SIGNALDEGRADATION EINES OPTISCHEN POLARISATION-MULTIPLEXSIGNALS**
METHOD AND ARRANGEMENT FOR REDUCING THE SIGNAL DEGRADATION IN AN OPTICAL POLARISATION-MULTIPLEX SIGNAL
PROCEDE ET DISPOSITIF POUR LIMITER LA DEGRADATION DE SIGNAL D'UN SIGNAL MULTIPLEXE EN POLARISATION OPTIQUE

(30) Priorität: 10.05.2002 DE 10220929; 16.09.2002 DE 10242915
(43) Veröffentlichungstag der Anmeldung: 16.03.2005
(73) Patentinhaber: SIEMENS AKTIENGESELLSCHAFT, 80333 München (DE)
(72) Erfinder: GOTTWALD, Erich, 83607 Holzkirchen (DE); HECKER, Nancy, 82319 Starnberg (DE); PAETSCH, Werner, 81479 München (DE); SCHAIRER, Wolfgang, 81379 München (DE)
(86) Internationale Anmeldenummer: PCT/DE2003/001446
(87) Internationale Veröffentlichungsnummer: WO 2003/096584

(56) Entgegenhaltungen:
- EP-A- 0 475 640
- EP-A- 1 298 818
- US-A1- 2002 003 641
- US-B1- 6 342 961

## Beschreibung

Die Erfindung betrifft ein Verfahren und eine Anordnung zur Verringerung der Signaldegradation nach dem Oberbegriff des Patentanspruchs 1 und eine Anordnung hierzu nach dem Oberbegriff des Anspruchs 9.

Bei optischen Übertragungssystemen wird zur Erhöhung der Übertragungskapazität das Polarisation-Multiplexverfahren angewendet, bei dem zwei zueinander vorteilhafter Weise orthogonal polarisierte Signale auf der selben Wellenlänge übertagen werden.

Das Auftreten von Polarisationsmodendispersion (PMD) führt zu einem kohärenten Übersprechen zwischen den Signalen. Dieses Übersprechen (Crosstalk) macht bereits bei geringen PMD-Werten eine fehlerfreie Übertragung von Polarisation-Multiplexsignalen unmöglich, während bei Übertragungssystemen ohne Polarisationsmultiplex diese PMD-Werte noch tolerierbar sind. Die Störungen machen sich sowohl bei (auch mehrstufiger) Amplituden- als auch bei Winkelmodulation bemerkbar.

In der europäischen Patentanmeldung EP 1 202 485 A1 wird ein Verfahren zur Übertragung von Polarisation-Multiplexsignalen beschrieben, bei dem ein Signal in zwei Teilsignale aufgeteilt wird, die dann mit zueinander senkrechten Polarisationsebenen wieder zu einem Zeitmultiplexsignal zusammengefasst werden. Durch das Zeitmultiplexverfahren werden gegenseitige Signalstörungen vermieden und die Datenrate in jedes Signals halbiert. Es. wird jedoch nicht die geforderte Verdopplung der Übertragungskapazität errreicht.

Ein weiteres Verfahren zur Verringerung der Signaldegradation in optischen Polarisations-Multiplexsignalen ist aus US2002/0003641A1 bekannt.

Aufgabe der Erfindung ist es, die Signaldegradation bei Polarsation-Multiplexsignalen zu verringern, ohne die Übertragungskapazität einzuschränken.

Diese Aufgabe wird durch ein Verfahren mit den Merkmalen des Anspruchs 1 gelöst. Eine geeignete Anordnung ist in Anspruch 11 angegeben.

Vorteilhafte Weiterbildungen sind in den abhängigen Ansprüchen angegeben.

Der Kern der Erfindung besteht darin, die von einem Signal verursachten Störungen zeitlich so anzuordnen, dass sie in den unkritischen Bereich des anderen Signals fallen, in dem die Auswertung des logischen Zustands nicht beeinflusst wird. Da diese Störungen von den Bitgrenzen (bei Mehrphasenmodulation werden hierunter die Grenzen der Modulationsabschnitte verstanden) ausgehen und bei Amplitudenmodulation durch die Signalflanken verursacht werden, sollten beide zu übertragenen Signale so synchronisiert werden, dass ihre Bitgrenzen bzw. Signalflanken nicht in die kritischen Auswertungsbereiche, also nicht in die Bitmitten und deren Nähe, fallen. Bei NRZ (not return to zero)-Signalen sollen daher die Bitgrenzen zusammenfallen. Bei RZ-Signalen mit kurzen Impulsen wird dies durch eine Phasenverschiebung von 180° erreicht. Für winkelmodulierte Signale gilt entsprechendes.

Falls beide Signale aus unterschiedlichen Datenquellen stammen, ist eine Synchronisierung oder Taktanpassung notwendig.

Durch das erfindungsgemäße Verfahren wird die Toleranz gegenüber PMD mehr als verdoppelt, was zur Erhöhung der maximal möglichen regeneratorfreien Übertragungsstrecke um: den Faktor 4 führt.

Dies ermöglicht auch ein Übertragungsverfahren, bei dem Polarisationsmultiplex mit mehrstufiger Phasenmodulation kombiniert wird. Bei der Verwendung von Vierphasenmodulation wird eine vierfache Datenrate möglich. Ähnliche Vorteile ergeben sich bei einer Duobinärcodierung.

Ausführungsbeispiele der Erfindung werden anhand von Figuren näher beschrieben.

Es zeigen:
Figur 1 eine Senderanordnung mit einem elektrischen Phasenschieber zur Synchronisation,
Figur 2 eine Sendeanordnung zur Erzeugung synchroner polarisierte Signale,
Figur 3 eine Sendeanordnung zur Umsetzung eines Datensignals in zwei parallele polarisierte Sendesignale.
Figur 4 eine Sendeanordnung mit einer das Datenmultiplexsignal verwendenden Regelung,'
Figur 5 eine Sendeanordnung mit einer Vergleichseinrichtung zur Erzeugung des Regelsignals,
Figur 6 ein zugehöriges Zeitdiagramm,
Figur 7 eine Sendeanordnung mit zwei Phasendetektören und
Figur 8 ein zugehöriges Zeitdiagramm.

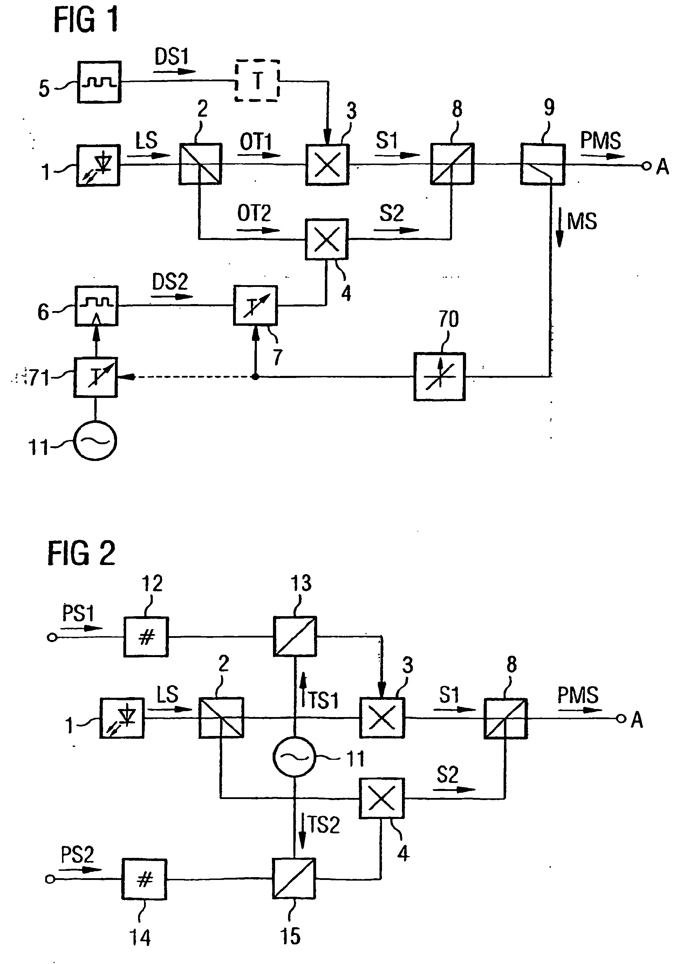

**Figur 1** zeigt eine Sendeanordnung zur Übertragung eines PMD-Signals. Bei dem Ausführungsbeispiel wird von linear polarisiertem Licht ausgegangen und zum leichteren Verständnis Amplitudenmodulation angenommen. Es sind jedoch auch eine andere (orthogonale) Polarisationen und andere Modulationsarten möglich.

Eine kohärente Lichtquelle (Laser) 1 erzeugt ein Lasersignal LS, dass in einem optischen Polarisationsstrahlteiler 2 in zwei orthogonale Komponenten, die Trägersignale OT1 und OT2, aufgeteilt wird. Diese werden jeweils einem Modulator, beispielsweise einem Mach-Zehnder-Modulator 3 bzw. 4 zugeführt. Der Modulator 3 wird von einer ersten elektrischen Datenquelle 5, die ein erstes Datensignal DS1 erzeugt, angesteuert. Eine zweite elektrische Datenquelle 6 erzeugt ein zweites Datensignal DS2, das über einen elektrisches Laufzeitglied (Phasenschieber) 7 dem zweiten Modulator 4 zugeführt wird. Die modulierten Signale S1 und S2 werden über einen Polarisationsstrahl-Kombinierer 8 (darunter wird jeder Kombinierer verstanden, der zum Zusammenfassen der Signale geeignet ist, beispielsweise auch ein 3dB-Koppler) zusammengeführt und das so gewonnene Polarisationsmultiplexsignal PMS wird am Ausgang A abgegeben. Es wird davon ausgegangen, dass beide Datenquellen synchron zueinander sind, so dass lediglich eine Synchronisationeinrichtung 7, 70 erforderlich ist, die für die optimale Phasenlage zwischen dem ersten Datensignal DS1 und dem zweiten Datensignal DS2 sorgt. Diese optimale Phasenlage wird durch einen Phasenschieber bewirkt, der als einstellbares elektrisches Laufzeitglied 7 realisiert ist. Prinzipiell kann der einstellbare Phasenschieber an jeder Stelle im Signalweg (einschließlich Taktzuleitung) des Signals S1 oder S2 angeordnet werden.

Vorteilhafter Weise wird das Laufzeitglied 7 von einer Regeleinrichtung 70 gesteuert, der ein vom Polarisation-Muliplexsignal PMS abgezweigtes Meßsignal MS zugeführt wird. Es können beliebige Regelkriterien, beispielsweise die Fehlerrate oder ein Oberwellenanteil des Signals zur Regelung verwendet werden. Um einen symmetrischen Regelbereich zu bekommen, kann ein weiteres (elektrisches) Verzögerungsglied 72 beispielsweise zwischen der ersten Datenquelle 5 und dem ersten Modulator 3 eingefügt werden. Prinzipiell könnte das elektrische Laufzeitglied 7 durch ein steuerbares optisches Verzögerungsglied 71 ersetzt werden. Das optische Laufzeitglied 71 wird beispielsweise nach dem zweiten Modulator 4 eingefügt.

Eine gleichwertige Lösung besteht in der Einfügung des Laufzeitgliedes in eine Taktsignalleitung, wenn eine Datenquelle von einem Taktgenerator 11 getriggert wird.

Bei NRZ-Signalen wird das elektrische Laufzeitglied 7 so eingestellt, dass sich Modulationsabschnittsgrenzen, bei Amplitudenmodulation die Flanken der zu übertragenden Signale S1 und S2, zu den selben Zeitpunkten auftreten (bei Winkelmodulation die Zeitpunkte der Frequenz- oder Phasenumtastung, z. B. Bitgrenzen), also die erzeugten Störungen möglichst weit vom Auswertebereich, meist dem Auswerte- oder Abtastzeitpunkt in der Bitmitte, entfernt sind.

**Figur 2** zeigt eine Anordnung zum Übertragen von plesiochronen Signalen. Zwei plesiochrone Datensignale PS1 und PS2 werden zunächst in Speicher 12 bzw. 14 eingeschrieben und aus diesen mit einem Taktsignal TS1 bzw. TS2 abgerufen, die beide von einem einzigen Taktgenerator 11 erzeugt werden. Die Anpassung zwischen der Datenrate der plesiochronen Signale und den Taktsignalen TS1 und TS2 erfolgt durch Taktanpassungen 13 bzw. 15, die Unterschiede in den Datenraten durch Stopfvorgänge ausgleichen. Bei NRZ-Signalen weisen die Taktsignale TS1 und TS2 die selbe Phasenlage auf.

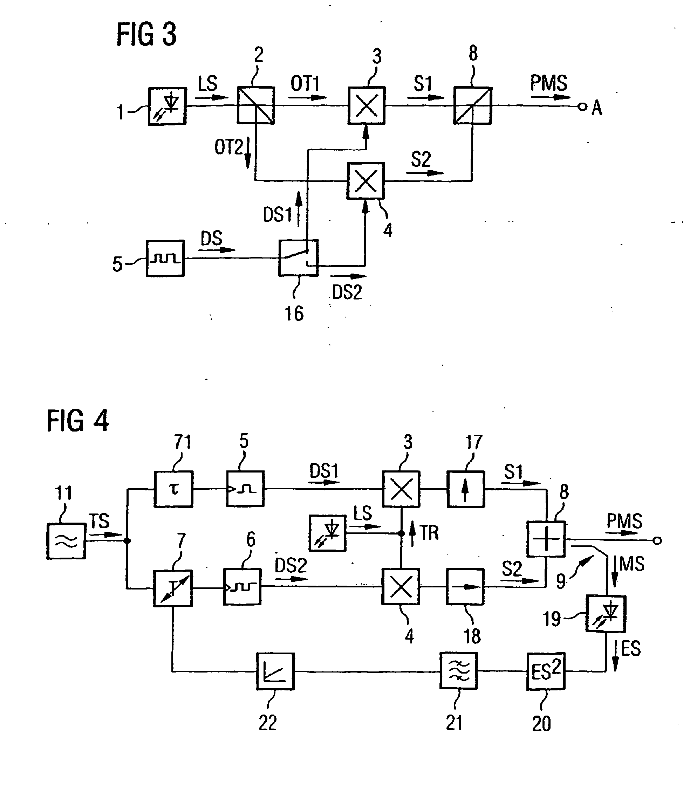

**Figur 3** zeigt eine Anordnung, bei der ein Datensignal DS durch einen Demultiplexer in zwei Datensignale DS1 und DS2 der halben Datenrate aufgeteilt werden. Mit diesen Datensignalen werden wiederum die orthogonalen Komponenten OT1, OT2 des Lasersignals LS moduliert und die modulierten Signale S1, S2 werden wiederum im Polarisationskoppler 9 zum Polarisations-Multiplexsignal PMS zusammengefasst. Bei NRZ-Signalen werden den Modulatoren Zwischenspeicher vorgeschaltet und die Modulation erfolgt synchron.

Wesentlich bei dem erfindungsgemäßen Verfahren ist eine möglichst optimale Phasenlage zwischen den orthogonal polarisierten, die selbe Datenrate aufweisenden Sendesignalen zur Minimierung der gegenseitigen Störungen.

In **Figur 4** ist eine Anordnung mit einer Regelung beschrieben. Zwei Datensignalquellen 5 und 6 werden von einem gemeinsamen Taktgenerator 11 getaktet. Das Taktsignal TS wird über ein festes Verzögerungsglied 71 bzw. ein einstellbares Verzögerungsglied 7 jeweils einer der Datensignalquellen zugeführt. Die Datensignalquellen geben jeweils ein Datensignal DS1 und DS2 ab, mit denen ein vom Laser 1 erzeugtes Trägersignal in den Modulatoren 3 und 4 amplitudenmoduliert wird. Bei dieser Ausführungsform sind zwei Polarisationssteller 17 und 18 vorgesehen, die die modulierten Signale in zwei zueinander orthogonale Polarisationsebenen drehen. Die orthogonalen Signale werden in einem Addierer 8 zusammengefasst und als Polarisationsmultiplexsignal PMS ausgesendet. Über einen Messkoppler 9 wird von diesem Signal ein Messsignal MS abgezweigt und in einer Fotodiode 19 in ein elektrisches Signal ES umgesetzt. Dies wird in einem Multiplizierer 20 quadriert und dann als quadriertes Messsignal ES² einem Filter 21, zweckmäßigerweise einem Bandpass, zugeführt. Wenn die Bitflanken der Signale S1 und S2 synchron sind, ist die Leistung in einem Frequenzbereich, der der Datenrate der Datensignale entspricht, beispielsweise im Frequenzbereich 10 Ghz bei einer Datenrate von 10 Gbit/s ein Minimum. Ein an den Ausgang des Filters angeschalteter Regler 22 variiert das einstellbare Laufzeitglied 7 so lange, bis dieses Minimum erreicht ist. Das einstellbare Laufzeitglied 7 kann an beliebiger Stelle im unteren zweiten Signalweg 7,6,4,18,8 der Anordnung eingeschaltet sein. Auch die in Figur 1 dargestellte Anordnung kann selbstverständlich mit dieser Regelung ausgestattet werden.

Durch die weitere Quadrierung des elektrischen Messsignals ES (die erste erfolgt durch die Fotodiode 19) erhält man ein besseres Regelkriterium. Grundsätzlich kann gesagt werden, dass man entweder auf ein Maximum der Grundfrequenz regelt oder auf ein Minimum der störenden Frequenzanteile, was im Allgemeinen einen weniger flachen Verlauf liefert.

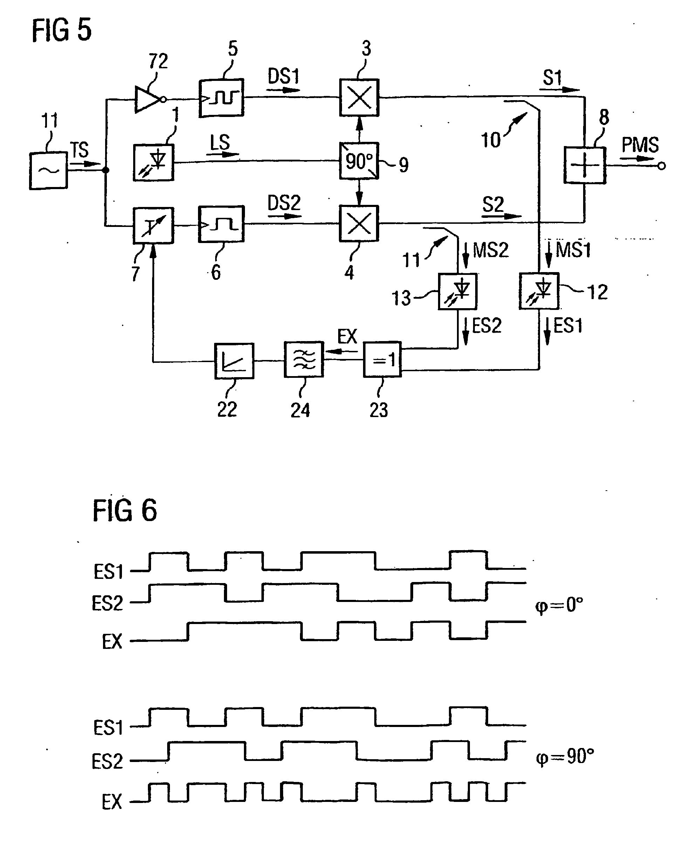

**Figur 5** zeigt eine weitere Variante der Regelung. Es werden wieder zwei orthogonal polarisierte amplitudenmodulierte Signale S1 und S2 erzeugt. Figur 5 unterscheidet sich von Figur 4 lediglich darin, das der vom Laser 1 erzeugte optische Träger über einem Polarisationsteiler 9 geführt wird, wodurch die Polarisationssteller entfallen können. Von beiden modulierten polarisierten Signalen S1 und S2 wird über Messkoppler 10 und 11 jeweils ein Messsignal MS1 und MS2 abgezweigt und optoelektrischen Wandlern 12 und 13 (Demodulatoren) zugeführt. Die elektrischen Signale werden miteinander in einem Exclusive-OR-Gatter bzw. Exclusive-NOR-Gatter miteinander logisch verglichen. Sind die Signale S1 und S2 ohne Phasenunterschied ϕ =0 synchron, wie dies im zeitdiagramm Figur 6 dargestellt ist, so weist das Ausgangssignal EX des Exclusive-OR-Glatters maximal die halbe Frequenz der Datenrate auf. Besteht jedoch ein Phasenunterschied, z. B. ϕ =90° zwischen den Signalen S1 und S2, wie ebenfalls im Zeitdiagramm **Figur 6** unten dargestellt ist, so verdoppelt sich die Ausgangsfzequenz. Je nach Ausführung des Filters 24 kann der Regler 22 auf ein Maximum seines Eingangssignals der halben Datenrate oder auf ein Minimum seines Eingangssignals mit höherer Datenrate durch Einstellen des Laufzeitgliedes 7 regeln.

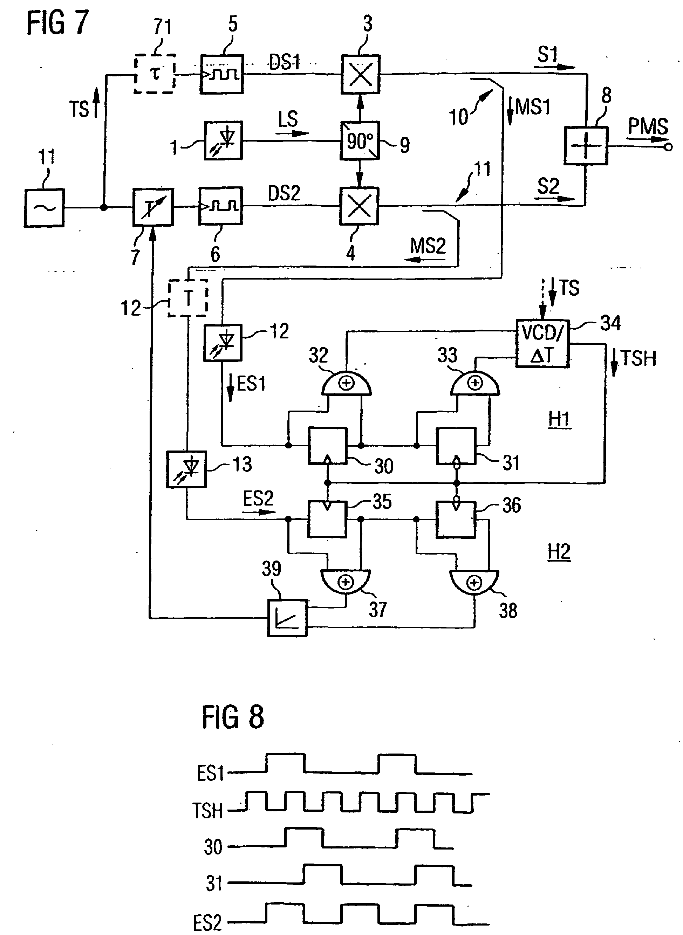

**Figur 7** zeigt eine weitere Anordnung zur Synchronisation, die zwei Phasendetektoren 30, 31, 32, 33 und 35, 36, 37, 38 enthält. Diese sind als Hogge-Phasendetektoren mit jeweils zwei Kippstufen 32, 33 bzw. 35, 36 und zwei Exclusive-OR-Gattern 32, 33 bzw. 37, 38 ausgeführt. Der erste Phasendetektor, der dem ersten (oberen) Signalweg 5, 3, 8 zugeordnet ist und sein Eingangssignal über einen ersten Messkoppler 10 und die Fotodiode 12 erhält, sorgt dafür, dass zwischen dem Eingangssignal und von einem steuerbaren Oszillator (VCO) 34 erzeugtes Taktsignal TSH eine definierte Phaseribeziehung besteht. Das Eingangssignal des Phasendetektors wird hierbei in der Bitmitte von dem Taktsignal TSH abgetastet und in der Kippstufe 30 zwischengespeichert. Da ein Taktsignal TS mit der selben Frequenz bereits vom Taktgenerator 11 erzeugt wird, kann anstelle des Oszillators auch ein einstellbares Laufzeitglied verwendet werden, wodurch die Schaltung wesentlich einfacher realisierbar ist.

Bei einem symmetrischen Aufbau wird durch den zweiten Phasendetektor 35,36,37,38, der sein Eingangssignal über den zweiten Messkoppler 11 und die Fotodiode 13 erhält, über den Regler 39 das einstellbare Laufzeitglied 7 so eingestellt, dass auch das Eingangssignal des zweiten Phasendetektors in der Mitte abgetastet wird, d.h. das beide Signale S1 und S2 phasensynchron sind. **Figur 8** zeigt diesen Fall in einem Zeitdiagramm.

Wird statt Amplitudenmodulation eine Winkelmodulation verwendet, können die gleichen Schaltungen verwendet werden, wenn die Signale zunächst in amplitudenmodulierte Signale umgesetzt werden.

## Patentansprüche

1. Verfahren zur Verringerung der Signaldegradation eines Polarisations-Multiplexsignals (PMS), das durch Zusammenfassen eines ersten modulierten optischen Signals (S1) und eines eine andere Polarisation aufweisenden, mit der gleichen Datenrate modulierten zweiten optischen Signals (S2) erzeugt wird,
**dadurch gekennzeichnet,**
**dass** bei der Übertragung von NRZ-modulierten Signalen (S1, S2) das erste optische NRZ Signal (S1) und das zweiten optische NRZ Signal (S2) mit einer Phasendifferenz von zumindest annähernd Null übertragen werden, so dass die Modulationsabschnittsgrenzen des ersten und des zweiten optischen NRZ Signals (S1, S2) maximal von Auswertungszeitpunkten des jeweils anderen optischen NRZ Signals (S2, S1) entfernt liegen.

2. Verfahren nach Anspruch 1,
**dadurch gekennzeichnet,**
**dass** zwischen dem ersten optischen NRZ Signal (S1) und dem zweiten optischen NRZ Signal (S2) eine Phasendifferenz von zumindest annähernd Null zwischen beiden Signalen (S1, S2) eingestellt oder erzeugt wird.

3. Verfahren nach Anspruch 1 oder 2,
**dadurch gekennzeichnet,**
**dass** das erste optische NRZ Signal (S1) durch Modulation eines ersten optischen Trägersignals (OT1) mit einem ersten Datensignal (DS1) erzeugt wird,
**dass** das zweite optische NRZ Signal (S2) durch Modulation eines zweiten optischen Trägersignals (OT2), das eine andere Polarisation aufweist, mit einem zweiten Datensignal (DS2) erzeugt wird und
**dass** diese beiden Datensignale (DS1, DS2) zueinander synchronisiert werden.

4. Verfahren nach Anspruch 1 oder 2,
**dadurch gekennzeichnet,**
**dass** das erste optische NRZ Signal (S1) durch Modulation eines ersten optischen Trägersignals (OT1) mit einem ersten Datensignal (DS1) erzeugt wird,
**dass** das zweite optische NRZ Signal (S2) durch Modulation eines zweiten optischen Trägersignals (OT2), das eine andere Polarisation aufweist, mit einem zweiten Datensignal (DS2) erzeugt wird und
**dass** das erste Datensignal (DS1) und das zweite Datensignal (DS2) zwischengespeichert und mit von nur einem Taktgenerator (11) abgeleitenden Taktsignalen (TS1, TS2) synchron den Trägersignalen (OT1, OT2) aufmoduliert werden.

5. Verfahren nach einem der Ansprüche 1 bis 4,
**dadurch gekennzeichnet,**
**dass** das erste Datensignal (DS1) und das zweite Datensignal (DS1) durch Demultiplexen eines Datensignal (DS) erzeugtwerden, dass das erste optische NRZ Signal (S1) durch Modulation eines ersten optischen Trägersignals (OT1) mit einem ersten Datensignal (DS1) erzeugt wird,
**dass** das zweite optische NRZ Signal (S2) durch Modulation eines zweiten optischen Trägersignals (OT2), das eine andere Polarisation aufweist, mit einem zweiten Datensignal (DS2) erzeugt wird.

6. Verfahren nach einem der Ansprüche 1 oder 2,
**dadurch gekennzeichnet,**
**dass** das erste optische NRZ Signal (S1) durch Modulation eines ersten optischen Trägersignals (OT1) durch zwei- oder mehrstufige Phasenmodulation mit einem ersten Datensignal (DS1) erzeugt wird, und
**daß** das zweite optische NRZ Signal (S2) durch Modulation eines zweiten optischen Trägersignals (OT2), das eine andere Polarisation aufweist, durch zwei- oder mehrstufige Phasenmodulation mit einem zweiten Datensignal (DS2) erzeugt wird.

7. Anordnung zur Verringerung der Signaldegradation bei einem optischen Polarisations-Multiplexsystem, die zwei Signalwege (5, 3, 8; 6, 4, 8) mit jeweils einem Modulator (3, 4) aufweist, und die zwei Datensignalquellen (5, 6) mit gleicher Datenrate aufweist, die jeweils einen optischer Träger modulieren, und die einen Kombinierer (8) aufweist, der die modulierten optischen NRZ Signale (S1, S2) zu einem Polarisationsmultiplexsignal (PMS) zusammengefasst,
**dadurch gekennzeichnet,**
**dass** mindestens ein Signalweg (1, 6, 8, 20) einen Phasenschieber (7) oder eine Taktanpassung (13, 15) aufweist, der/die die Phasendifferenz zwischen den modulierten und im NRZ-Format übertragen Signalen (S1, S2) zumindest annähernd auf Null reduziert.

8. Anordnung nach Anspruch 7,
**dadurch gekennzeichnet,**
**dass** in einen Signalweg zur Verschiebung eines der beiden modulierten optischen NRZ Signale (S2) gegenüber dem anderen modulierten optischen NRZ Signal (S1) ein einstellbares Laufzeitglied (7, 71) eingeschaltet ist.

9. Anordnung nach Anspruch 8,
**dadurch gekennzeichnet,**
**dass** als Phasenschieber ein einstellbares Verzögerungsglied (71) zwischen eine der Datensignalquellen (6) und einen die Datensignalquelle (6) durch ein Taktsignal (TS) triggernden Taktgenerator (11) eingeschaltet ist.

10. Anordnung Anspruch 8oder 9,
**dadurch gekennzeichnet,**
**dass** eine Synchronisiereinrichtung (9, 10, 7) vorgesehen ist, die den Phasenunterschied zwischen den modulierten optischen NRZ Signalen (S1, S2) zumindest annähernd auf Null regelt.

11. Anordnung Anspruch 10,
**dadurch gekennzeichnet,**
**dass** die Synchronisiereinrichtung (9, 19, 20, 21, 22; 7) aufweist:
einen Splitter (9), der einen Teil des Polarisationsmultiplexsignal (PMS) als Messsignal (MS) auskoppelt,
einen optoelektrischer Wandler (19), der das Messsignal (MS) in ein elektrisches Messsignal (ES) umsetzt,
einen Multiplizierer (20), der das elektrische Messsignal (ES) in ein quadriertes Messsignal (ES²) umsetzt,
ein Hochpasseigenschaften aufweisendes Filter, dessen untere Grenzfrequenz oberhalb der halben Datenrate liegt, oder ein Bandpasseigenschaften aufweisendes Filter (21), dessen Mittenfrequenz der Datenrate entspricht, dem das quadriertes Messsignal (ES²) zugeführt wird,
eine Regeleinrichtung (22, 7), der das quadrierte Messsignal (ES²) von dem Filter (21) als Regelsignal zugeführt wird und
die die Amplitude des Filter-Ausgangssignals durch zeitliche Verschiebung eines der beiden modulierten optischen NRZ Signale (S2) gegenüber dem anderen modulierten optischen NRZ Signal (S1) minimiert.

12. Anordnung Anspruch 10,
**dadurch gekennzeichnet,**
**dass** die Synchronisiereinrichtung (9, 19, 20, 21, 22, 7) aufweist:
einen Splitter (9), der einen Teil des Polarisationsmultiplexsignal (PMS) als Messsignal (MS) auskoppelt,
einen optoelektrischer Wandler (19), der das Messsignal (MS) in ein elektrisches Messsignal (ES) umsetzt,
einen Multiplizierer (20), der das elektrische Messsignal (ES) in ein quadriertes Messsignal (ES²) umsetzt,
ein Tiefpasseigenschaften aufweisendes Filter (21), dessen untere Grenzfrequenz oberhalb der halben Datenrate liegt, oder ein Bandpasseigenschaften aufweisendes Filter (21), dessen Mittenfrequenz der halben Datenrate entspricht, dem das quadriertes Messsignal (ES²) zugeführt wird,
eine Regeleinrichtung (22, 7), der das quadrierte Messsignal (ES²) von einem Filter als Regelsignal zugeführt wird und die die Amplitude des Filter-Ausgangssignals durch zeitliche Verschiebung eines der beiden modulierten Signale (S2) gegenüber dem anderen modulierten Signal (S1) maximiert.

13. Anordnung nach Anspruch 10, bei der ein optischer Träger von zwei Datensignalquellen (5, 6) gleicher Datenrate moduliert wird,
**dadurch gekennzeichnet,**
**dass** die Synchronisiereinrichtung aufweist:
zwei Messkoppler (10, 11), die von jedem der modulierten Signale (S1, S2) ein Messsignal (MS1, MS2) auskoppeln, optoelektrische Wandler (12, 13), die die Messsignale (MS1, MS2) in elektrische Messsignale (ES1, ES2) umsetzen,
ein Exclusive-OR-Gatter (23), dem die elektrischen Messsignale (ES1, ES2) zugeführt werden,
einen Regler (22), dem das Ausgangssignal des Exclusive-OR-Gatter (23) über ein Filter (24) zugeführt wird und
der des gefilterte Ausgangssignal bei einem Hoch- oder Bandpaßeigenschaften aufweisendem Filter auf einen Minimalwert und bei einem Tiefpasseigenschaften aufweisenden Filter auf einen Maximalwert regelt.

14. Anordnung nach Anspruch 10,
**dadurch gekennzeichnet,**
**dass** die Synchronisiereinrichtung aufweist:
einen ersten Messkoppler (10), der im ersten Signalweg angeordnet ist und vom ersten modulierten Signal (S1) ein erstes Messsignal (MS1) auskoppelt,
einen ersten Phasendetektor (30, 31, 32, 33)im ersten Signalweg, dem das erste Messsignal (MS1) über einen ersten opto-elektrischen Wandler (12) zugeführt wird und der einen Taktregenerator (34) steuert, der einen Vergleichstakt (TSH) erzeugt,
einen zweiten Messkoppler (11), der im zweiten Signalweg angeordnet ist und vom zweiten modulierten Signal (S2) zweites Messsignal (MS2) auskoppelt,
einen zweiten Phasendetektor (35, 36, 37, 38) im zweiten Signalweg, dem der Vergleichstakt (TSH) und über einen zweiten optoelektrischen Wandler (13) das zweite Messsignal (MS2) zugeführt werden,
einen Regler (39), der vom zweiten Phasendetektor (35, 36, 37, 38) gesteuert wird und ein Verzögerungsglied (7) im zweiten Signalweg oder. Taktsignalweg so steuert, dass beide modulierte Signale (S1, S2) die selbe Phasenlage aufweisen.

15. Anordnung nach Anspruch 14,
**dadurch gekennzeichnet,**
**dass** als Taktregenerator (34) ein gesteuertes Laufzeitglied vorgesehen ist, dem das von Taktgenerator (11) erzeugte Taktsignal (TS) zugeführt wird.

## Claims

1. Method for reducing the signal degradation of a polarisation multiplex signal (PMS) which is generated by combining a first modulated optical signal (S1) and a second optical signal (S2) having a different polarisation and modulated at the same data rate,
**characterised in that**
during the transmission of NRZ-modulated signals (S1, S2) the first optical NRZ signal (S1) and the second optical NRZ signal (S2) are transmitted with a phase difference of at least approximately zero, with the result that the modulation segment boundaries of the first and the second optical NRZ signal (S1, S2) have a maximum separation from evaluation time points of the other optical NRZ signal (S2, S1) in each case.

2. Method according to claim 1,
**characterised in that**
a phase difference of at least approximately zero between the two signals (S1, S2) is set or generated between the first optical NRZ signal and the second optical NRZ signal (S2).

3. Method according to claim 1 or 2,
**characterised in that**
the first optical NRZ signal (S1) is generated by modulating a first optical carrier signal (OT1) with a first data signal (DS1),
the second optical NRZ signal (S2) is generated by modulating a second optical carrier signal (OT2) having a different polarisation with a second data signal (DS2) and
said two data signals (DS1, DS2) are synchronised with each other.

4. Method according to claim 1 or 2,
**characterised in that**
the first optical NRZ signal (S1) is generated by modulating a first optical carrier signal (OT1) with a first data signal (DS1),
the second optical NRZ signal (S2) is generated by modulating a second optical carrier signal (OT2) having a different polarisation with a second data signal (DS2) and
the first data signal (DS1) and the second data signal (DS2) are buffered and modulated synchronously onto the carrier signals (OT1, OT2) by means of clock signals (TS1, TS2) derived from just one clock generator (11).

5. Method according to one of claims 1 to 4,
**characterised in that**
the first data signal (DS1) and the second data signal (DS2) are generated by demultiplexing a data signal (DS),
the first optical NRZ signal (S1) is generated by modulating a first optical carrier signal (OT1) with a first data signal (DS1),
the second optical NRZ signal (S2) is generated by modulating a second optical carrier signal (OT2) having a different polarisation with a second data signal (DS2).

6. Method according to one of claims 1 or 2,
**characterised in that**
the first optical NRZ signal (S1) is generated by modulating a first optical carrier signal (OT1) with a first data signal (DS1) by means of two- or multi-stage phase modulation, and
the second optical NRZ signal (S2) is generated by modulating a second optical carrier signal (OT2) having a different polarisation with a second data signal (DS2) by means of two-or multi-stage phase modulation.

7. Arrangement for reducing the signal degradation in an optical polarisation multiplex system, said arrangement having two signal paths (5, 3, 8; 6, 4, 8), each of which has a modulator (3, 4), having two data signal sources (5, 6) operating at the same data rate, each of which modulates an optical carrier, and having a combiner (8) which combines the modulated optical NRZ signals (S1, S2) into a polarisation multiplex signal (PMS),
**characterised in that**
at least one signal path (1, 6, 8, 20) has a phase shifter (7) or a clock adapter (13, 15) which reduces the phase difference between the modulated signals (S1, S2) transmitted in NRZ format at least approximately to zero.

8. Arrangement according to claim 7,
**characterised in that**
an adjustable delay element (7, 71) is connected into the circuit in a signal path for shifting one of the two modulated optical NRZ signals (S2) relative to the other modulated optical NRZ signal (S1).

9. Arrangement according to claim 8,
**characterised in that**
an adjustable delay element (71) is connected into the circuit as a phase shifter between one of the data signal sources (6) and a clock generator (11) triggering the data signal source (6) by means of a clock signal (TS).

10. Arrangement according to claim 8 or 9,
**characterised in that**
a synchronising device (9, 10, 7) is provided that adjusts the phase difference between the modulated optical NRZ signals (S1, S2) at least approximately to zero.

11. Arrangement according to claim 10,
**characterised in that**
the synchronising device (9, 19, 20, 21, 22, 7) has:
a splitter (9) which decouples a part of the polarisation multiplex signal (PMS) as a measurement signal (MS),
an opto-electrical converter (19) which converts the measurement signal (MS) into an electrical measurement signal (ES),
a multiplier (20) which converts the electrical measurement signal (ES) into a squared measurement signal (ES²),
a filter having high-pass characteristics and a lower limit frequency lying above half the data rate, or a filter (21) having band-pass characteristics and a midband frequency corresponding to the data rate and being supplied with the squared measurement signal (ES²),
a control device (22, 7) to which the squared measurement signal (ES²) is supplied as a control signal by the filter (21) and which minimises the amplitude of the filter output signal by offsetting one of the two modulated optical NRZ signals (S2) in time relative to the other modulated optical NRZ signal (S1) .

12. Arrangement according to claim 10,
**characterised in that**
the synchronising device (9, 19, 20, 21, 22, 7) has:
a splitter (9) which decouples a part of the polarisation multiplex signal (PMS) as a measurement signal (MS),
an opto-electrical converter (19) which converts the measurement signal (MS) into an electrical measurement signal (ES),
a multiplier (20) which converts the electrical measurement signal (ES) into a squared measurement signal (ES²),
a filter (21) having low-pass characteristics and a lower limit frequency lying above half the data rate, or a filter (21) having band-pass characteristics and a midband frequency corresponding to half the data rate and being supplied with the squared measurement signal (ES²),
a control device (22, 7) to which the squared measurement signal (ES²) is supplied as a control signal by a filter and
which maximises the amplitude of the filter output signal by offsetting one of the two modulated optical NRZ signals (S2) in time relative to the other modulated optical NRZ signal (S1) .

13. Arrangement according to claim 10, wherein an optical carrier is modulated by two data signal sources (5, 6) operating at the same data rate,
**characterised in that**
the synchronising device has:
two measuring couplers (10, 11) which decouple a measurement signal (MS1, MS2) from each of the modulated signals (S1, S2), opto-electrical converters (12, 13) which convert the measurement signals (MS1, MS2) into electrical measurement signals (ES1, ES2),
an exclusive OR gate (23) to which the electrical measurement signals (ES1, ES2) are supplied,
a controller (22) to which the output signal of the exclusive OR gate (23) is supplied via a filter (24) and which adjusts the filtered output signal to a minimum value in the case of a filter having high-pass or band-pass characteristics and to a maximum value in the case of a filter having low-pass characteristics.

14. Arrangement according to claim 10,
**characterised in that**
the synchronising device has:
a first measuring coupler (10) which is disposed in the first signal path and decouples a first measurement signal (MS1) from the first modulated signal (S1),
a first phase detector (30, 31, 32, 33) in the first signal path, said phase detector being supplied with the first measurement signal (MS1) via a first opto-electrical converter (12) and controlling a clock regenerator (34) which generates a comparison clock pulse (TSH),
a second measuring coupler (11) which is disposed in the second signal path and decouples a second measurement signal (MS2) from the second modulated signal (S2),
a second phase detector (35, 36, 37, 38) in the second signal path, said phase detector being supplied with the comparison clock pulse (TSH) and, via a second opto-electrical converter (13), the second measurement signal (MS2),
a controller (39) which is controlled by the second phase detector (35, 36, 37, 38) and controls a delay element (7) in the second signal path or clock signal path in such a way that both modulated signals (S1, S2) have the same phase position.

15. Arrangement according to claim 14,
**characterised in that**
a controlled delay line is provided as the clock regenerator (34) and is supplied with the clock signal (TS) generated by the clock generator (11).

## Revendications

1. Procédé pour réduire la dégradation du signal d'un multiplex en polarisation (PMS), qui est généré par regroupement d'un premier signal (S1) optique modulé et d'un second signal (S2) optique présentant une autre polarisation et modulé avec le même débit de données,
**caractérisé en ce que**
lors de la transmission de signaux (S1, S2) modulés par NRZ, le premier signal NRZ (S1) optique et le second signal NRZ (S2) optique sont transmis avec une différence de phase d'au moins approximativement zéro, de sorte que les limites d'intervalle de modulation du premier et du second signal NRZ (S1, S2) optique sont éloignées au maximum des moments d'évaluation de l'autre signal NRZ (S2, S1) optique respectif.

2. Procédé selon la revendication 1,
**caractérisé en ce que**
entre le premier signal NRZ (S1) optique et le second signal NRZ (S2) optique est réglée ou générée une différence de phase d'au moins approximativement zéro entre les deux signaux (S1, S2).

3. Procédé selon la revendication 1 ou 2,
**caractérisé en ce que**
le premier signal NRZ (S1) optique est généré par modulation d'un premier signal porteur (OT1) optique avec un premier signal de données (DS1),
**en ce que** le second signal NRZ (S2) optique est généré par modulation d'un second signal porteur (OT2) optique, qui présente une autre polarisation, avec un second signal de données (DS2) et
**en ce que** ces deux signaux de données (DS1, DS2) sont synchronisés entre eux.

4. Procédé selon la revendication 1 ou 2,
**caractérisé en ce que**
le premier signal NRZ (S1) optique est généré par modulation d'un premier signal porteur (OT1) optique avec un premier signal de données (DS1),
**en ce que** le second signal NRZ (S2) optique est généré par modulation d'un second signal porteur (OT2) optique, qui présente une autre polarisation, avec un second signal de données (DS2) et
**en ce que** le premier signal de données (DS1) et le second signal de données (DS2) sont stockés provisoirement et sont modulés, avec des signaux de rythme (TS1, TS2) dérivés de seulement un générateur de rythme (11), de façon synchrone sur les signaux porteurs (OT1, OT2).

5. Procédé selon l'une quelconque des revendications 1 à 4,
**caractérisé en ce que**
le premier signal de données (DS1) et le second signal de données (DS1) sont générés par démultiplexage d'un signal de données (DS), **en ce que** le premier signal NRZ (S1) optique est généré par modulation d'un premier signal porteur (OT1) optique avec un premier signal de données (DS1),
**en ce que** le second signal NRZ (S2) optique est généré par modulation d'un second signal porteur (OT2) optique, qui présente une autre polarisation, avec un second signal de données (DS2).

6. Procédé selon la revendication 1 ou 2,
**caractérisé en ce que**
le premier signal NRZ (S1) optique est généré par modulation d'un premier signal porteur (OT1) optique par modulation de phase à deux niveaux ou plusieurs niveaux avec un premier signal de données (DS1), et
**en ce que** le second signal NRZ (S2) optique est généré par modulation d'un second signal porteur (OT2) optique, qui présente une autre polarisation, par une modulation de phase à deux niveaux ou plusieurs niveaux avec un second signal de données (DS2).

7. Agencement pour réduire la dégradation du signal dans le cas d'un système de multiplexage de polarisation optique, qui présente deux trajets de signal (5, 3, 8 ; 6, 4, 8) présentent respectivement un modulateur (3, 4), et qui présente deux sources de signal de données (5, 6) avec un débit de données identique, lesquelles modulent respectivement un support optique, et qui présentent un combineur (8) qui regroupe les signaux NRZ (S1, S2) optiques modulés en un multiplex en polarisation (PMS),
**caractérisé en ce que**
au moins un trajet de signal (1, 6, 8, 20) présente un déphaseur (7) ou une adaptation de rythme (13, 15), qui réduit la différence de phase entre les signaux (S1, S2) modulés et transmis dans le format NRZ au moins approximativement vers zéro.

8. Agencement selon la revendication 7,
**caractérisé en ce que**
un élément de temps de propagation (7, 71) réglable est enclenché dans un trajet de signal pour déplacer l'un des deux signaux NRZ (S2) optiques modulés par rapport à l'autre signal NRZ (S1) optique modulé.

9. Agencement selon la revendication 8,
**caractérisé en ce que**,
comme déphaseur, un élément de retard (71) réglable est enclenché entre l'une des sources de signal de données (6) et un générateur de rythme (11) déclenchant la source de signal de données (6) par un signal de rythme (TS) .

10. Agencement selon la revendication 8 ou 9,
**caractérisé en ce que**,
un dispositif de synchronisation (9, 10, 7) est prévu, lequel règle la différence de phase entre les signaux NRZ (S1, S2) optiques modulés au moins approximativement sur zéro.

11. Agencement selon la revendication 10,
**caractérisé en ce que**
le dispositif de synchronisation (9, 19, 20, 21, 22, 7) présente
un répartiteur (9), qui extrait une partie du multiplex en polarisation (PMS) comme signal de mesure (MS),
un convertisseur (19) optoélectrique, qui convertit le signal de mesure (MS) en un signal de mesure (ES) électrique,
un multiplicateur (20) qui convertit le signal de mesure électrique (ES) en un signal de mesure élevé au carré (ES²),
un filtre présentant des propriétés de filtre passe-haut, dont la fréquence limite inférieure se situe au-dessus du demi débit de données, ou un filtre (21) présentant les propriétés de filtre passe-bande, dont la fréquence moyenne correspond au débit de données, auquel est amené le signal de mesure élevé au carré (ES²),
un dispositif de réglage (22, 7), auquel est amené le signal de mesure élevé au carré (ES²) provenant du filtre (21) comme signal de réglage et qui minimise l'amplitude du signal de sortie de filtre par un décalage dans le temps de l'un des deux signaux NRZ (S2) optiques modulés par rapport à l'autre signal NRZ (S1) optique modulé.

12. Agencement selon la revendication 10,
**caractérisé en ce que**
le dispositif de synchronisation (9, 19, 20, 21, 22, 7) présente :
un répartiteur (9), qui extrait une partie du signal de multiplex de polarisation (PMS) comme signal de mesure (MS),
un convertisseur (19) optoélectrique, qui convertit le signal de mesure (MS) en un signal de mesure électrique (ES),
un multiplicateur (20) qui convertit le signal de mesure électrique (ES) en un signal de mesure élevé au carré (ES²),
un filtre (21) présentant des propriétés de filtre passe-bas, dont la limite de fréquence inférieure est au-dessus du demi-débit de données, ou un filtre (21) présentant des propriétés de filtre passe-bande, dont la fréquence moyenne correspond au demi-débit de données, auquel le signal de mesure élevé au carré (ES²) est amené,
un dispositif de réglage (22, 7) auquel est amené le signal de mesure élevé au carré (ES²) provenant d'un filtre comme signal de réglage et qui maximise l'amplitude du signal de sortie de filtre par un décalage dans le temps de l'un des deux signaux (S2) modulés par rapport à l'autre signal (S1) modulé.

13. Agencement selon la revendication 10, dans lequel un support optique est modulé par deux sources de signal de données (5, 6) de débit de données identique,
**caractérisé en ce que**
le dispositif de synchronisation présente :
deux coupleurs de mesure (10, 11), qui extraient un signal de mesure (MS1, MS2) de chacun des signaux (S1, S2) modulés,
des convertisseurs (12, 13) optoélectriques qui convertissent les signaux de mesure (MS1, MS2) en signaux de mesure électriques (ES1, ES2),
un circuit combinatoire Exclusive-OR (23), auquel sont amenés les signaux de mesure électriques (ES1, ES2),
un régulateur (22), auquel le signal de sortie du circuit combinatoire Exclusive-OR (23) est amené via un filtre (24) et
qui régule le signal de sortie filtré dans le cas d'un filtre présentant des propriétés de filtre passe-haut ou des propriétés de filtre passe-bande sur une valeur minimale et
dans le cas d'un filtre présentant des propriétés de filtre passe-bas sur une valeur maximale.

14. Agencement selon la revendication 10,
**caractérisé en ce que**
le dispositif de synchronisation présente :
un premier coupleur de mesure (10), qui est disposé dans le premier trajet de signal et extrait un premier signal de mesure (MS1) du premier signal (S1) modulé,
un premier détecteur de phase (30, 31, 32, 33) dans le premier trajet de signal, auquel le premier signal de mesure (MS1) est amené via un premier convertisseur (12) optoélectrique et qui commande un régénérateur de rythme (34), lequel génère un rythme de comparaison (TSH),
un second coupleur de mesure (11), qui est disposé dans le second trajet de signal et extrait un second signal de mesure (MS2) du second signal (S2) modulé,
un second détecteur de phase (35, 36, 37, 38) dans le second trajet de signal auquel sont amenés le rythme de comparaison (TSH) et par un second convertisseur (13) optoélectrique le second signal de mesure (MS2),
un régulateur (39), qui est commandé par le second détecteur de phase (35, 36, 37, 38) et commande un élément de retard (7) dans le second trajet de signal ou le second trajet de signal de rythme de sorte que les deux signaux (S1, S2) modulés présentent la même position de phase.

15. Agencement selon la revendication 14,
**caractérisé en ce que**
il est prévu comme régénérateur de rythme (34) un élément de temps de propagation commandé auquel est amené le signal de rythme (TS) généré par le générateur de rythme (11).
